# EUROPEAN PATENT APPLICATION

(11) **EP 4 647 222 A1**
(43) Date of publication of application: **12.11.2025**
(21) Application number: 24863216.8
(22) Date of filing: 05.09.2024
(51) Int. Cl.: B26D 1/09, B26D 1/00, B26D 7/18, H01M 4/04, H01M 50/533, H01M 10/04

(54) **ELECTRODE CUTTER FOR PREVENTING ELECTRODE DELAMINATION**

(30) Priority: 08.09.2023 KR 20230119914; 03.09.2024 KR 20240119115
(71) Applicant: LG Energy Solution, Ltd., Seoul 07335 (KR)
(72) Inventor: LEE, Hun Hyeong, Daejeon 34122 (KR); RYU, Do Gyun, Daejeon 34122 (KR); SEO, Myeong Geun, Daejeon 34122 (KR)
(74) Representative: Plasseraud IP
(86) International application number: PCT/KR2024/013400
(87) International publication number: WO 2025/053637

(57) **Abstract**

Disclosed is an electrode cutter capable of preventing or reducing a thin and long thread-like detached material generated during a process of cutting an electrode or reducing the length of the detached material. The electrode cutter includes an upper cutter and a lower cutter, wherein a zigzag-shaped cutting portion is provided on at least one of a surface of the upper cutter and a surface of the lower cutter in a blade length direction. The zigzag shape prevents the detached material or significantly reduces the length thereof.

## Description

### [Technical Field]

The present invention relates to an electrode cutter capable of preventing electrode detachment, an electrode cutting method using the same, an electrode manufactured by the method, and an electrode assembly including the electrode. More particularly, the present invention relates to an electrode cutter capable of preventing or reducing burrs or detached powder generated during a process of cutting an electrode, an electrode cutting method using the same, an electrode manufactured by the method, and an electrode assembly including the electrode.

### [Background Art]

A lithium secondary battery includes an electrode assembly including a positive electrode coated with a positive electrode active material, a negative electrode coated with a negative electrode active material, and a separator located between the positive electrode and the negative electrode, the separator being configured to prevent short circuit and to allow lithium ions (Li-ions) to move therethrough, a battery case configured to receive the electrode assembly, and an electrolyte solution injected into the battery case, the electrolyte solution being configured to allow lithium ions to move therethrough.

The positive electrode and the negative electrode may be manufactured in the form of a unit electrode by coating, drying, and rolling a positive electrode active material and a negative electrode active material on a long sheet-shaped positive electrode current collector and a long sheet-shaped negative electrode current collector, respectively, and then cutting the same to have a certain size.

A conventional electrode cutting apparatus for manufacturing such a unit electrode includes a conveying unit configured to convey an electrode in the form of a long sheet on which an electrode active material has been coated, dried, and rolled in the state in which the electrode is seated thereon and a cutter installed on one side of the conveying unit. The cutter is divided into an upper cutter and a lower cutter. Specifically, the upper cutter is fixed at an upper side, and the lower cutter is installed at a lower side with respect to the long sheet-shaped electrode. When the long sheet-shaped electrode is conveyed to the electrode cutting apparatus, a cutter blade of the upper cutter and a cutter blade of the lower cutter come into contact with each other to cut the long sheet-shaped electrode.

As the cutting process of the upper cutter and the lower cutter is repeatedly carried out, the cutter blades are worn or the cutter blades are bent, whereby the cut part of the long sheet-shaped electrode is not smooth, or burrs or detached powder is generated. In addition to continuous use, defects may also occur due to installation errors such as an increase in clearance between the upper cutter and the lower cutter or misalignment between installation surfaces of the upper cutter and the lower cutter.

During the process of cutting the long sheet-shaped electrode, problems occurs in the current collector, which is a metal thin film, the positive electrode active material, or the negative electrode active material. The clearance between the upper cutter and the lower cutter is small, whereby the friction force between the cutter blades and the electrode active material is high. Due to the friction force, defects may occur in the electrode active material even though the cutter is in a normal state. If the adhesive force in the electrode active material is low or if the adhesive force between the electrode active material and the current collector is low, the electrode active material falls off from the cut surface of the long sheet-shaped electrode, or the electrode active material and the current collector fall off from the cut surface of the long sheet-shaped electrode, whereby detachment occurs or detached powder (hereinafter referred to as "detached material") is generated.

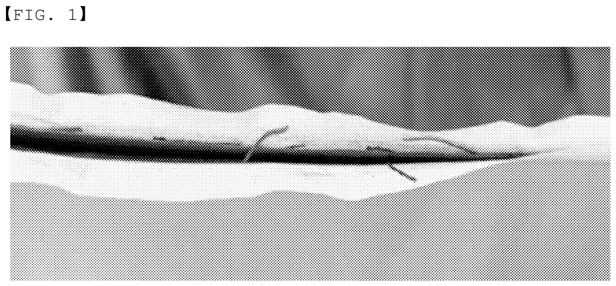

In particular, the detached material generated at the negative electrode is often in the form of a string with a small width and a long length. This causes short circuit in which the negative electrode and the positive electrode are in contact with each other or a bridge phenomenon in which the negative electrode and the positive electrode are connected to each other. The detached material mentioned herein is not simply powder, but is in a thin and long form such as a string or a thread, which is attached to a cut part of the negative electrode or the positive electrode. FIG. 1 shows a cut surface of a negative electrode to which such a detached material is attached. In FIG. 1, a negative electrode is disposed at the middle so as to extend to the left and right, and a detached material protrudes upward and downward therefrom like a thread. In FIG. 1, the bright color or white color above and below the negative electrode indicates separators.

When the content of a binder in the electrode active material is increased to increase the adhesion of the electrode active material, it is possible to reduce or prevent the detached material. In this case, the performance of the battery may be degraded due to increased resistance caused by an increase in content of the binder in the electrode.

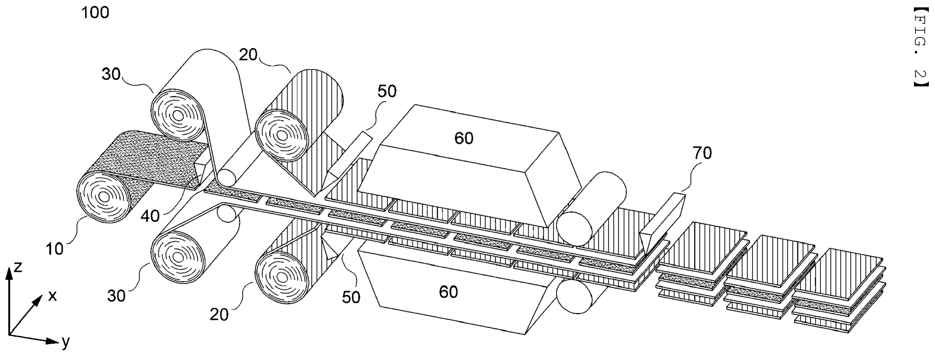

FIG. 2 is a schematic view showing a general electrode lamination apparatus 100. The electrode lamination apparatus 100 shown in FIG. 2 is an example of an electrode manufacturing apparatus for laminating a total of five layers, i.e., an upper and lower electrode 20, a separator 30, a middle electrode 10, a separator 30, and an upper and lower electrode 20 from the top (z-axis direction). In FIG. 2, tabs of the electrodes are omitted.

Referring to FIG. 2, the middle electrode 10 and the upper and lower electrodes 20 are respectively cut by a first cutter 40 and a second cutter 50, and are manufactured in the form of a unit electrode of a certain size by a third cutter 70 after passing through a lamination unit 60. An electrode cutter according to the present invention related to a first cutter 40 and a second cutter 50 configured to cut long sheet-shaped electrodes 10 and 20. However, even if the electrodes are not in the form of long sheets but are already cut, the same problem is encountered during the process of re-cutting electrodes, and therefore the electrode cutter is not necessarily only applied to long sheet-shaped electrodes.

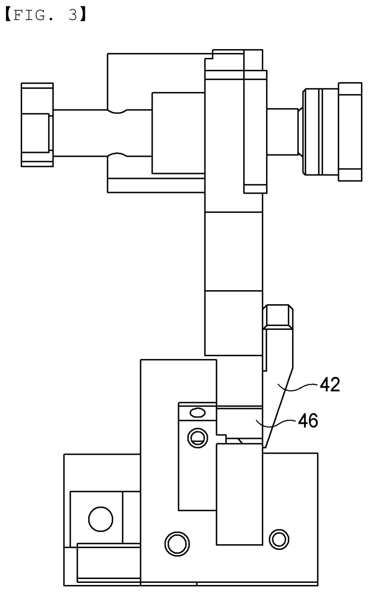

FIG. 3 is a side view of a conventional electrode cutting apparatus, showing a part of the electrode cutting apparatus having a link-type assembly structure in which individual parts of an upper unit and a lower unit are directly fastened to a main frame step by step. In FIG. 3, an upper cutter 42 and a lower cutter 46 are disposed. An electrode is cut by surfaces of the upper cutter and the lower cutter in contact with each other.

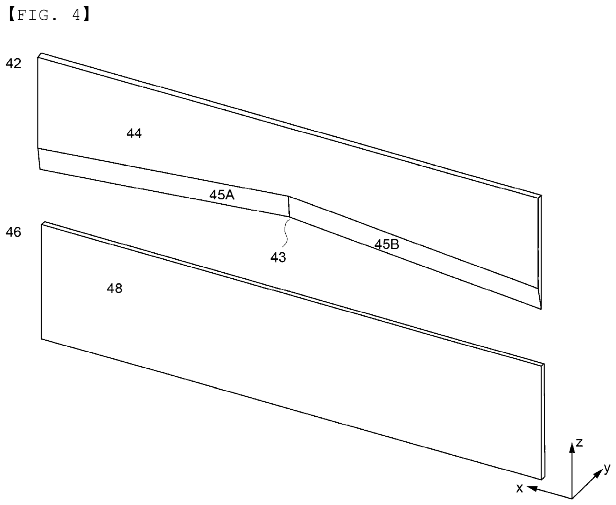

FIG. 4 is a perspective view showing the upper cutter 42 and the lower cutter 46 of the conventional cutter. Referring to FIG. 4, the conventional upper cutter 42 includes an upper cutter body 44 generally formed in the shape of a cuboid having a large length and a small thickness, a lower part of the upper cutter body being inclined upward (z-axis) toward the inside of the cuboid so as to be symmetrical with respect to the middle of the cuboid in a blade length direction, and a first upper cutter blade 45A and a second upper cutter blade 45B disposed so as to be symmetrical with respect to an upper cutter blade middle part 43, which is the middle of the lower part of the upper cutter body 44 in the blade length direction, the first upper cutter blade and the second upper cutter blade being provided only on a front surface (-y direction) of the upper cutter body 44 in a shape of being inclined upward. The lower cutter 46 includes a lower cutter body 48 generally formed in the shape of a cuboid having a large length and a small thickness. The upper cutter 42 may not have the shape inclined upward (z axis) toward the inside of the cuboid, and may not have the first upper cutter blade 45A and the second upper cutter blade 45B. The present invention is not necessarily limited to the shape of FIG. 4.

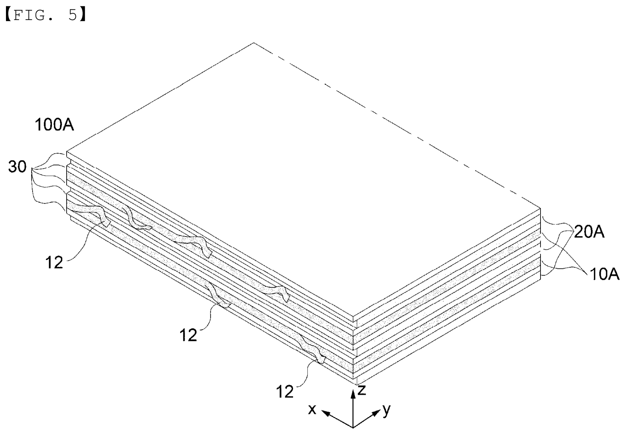

When an electrode is cut using the upper cutter and the lower cutter shown in FIG. 4, a detached material as shown in FIG. 1 is generated. FIG. 5 is a schematic view showing a conventional electrode assembly in which electrodes each including a detached material 12 are stacked. Referring to FIG. 5, the conventional electrode assembly 100A includes three positive electrodes 20A, two negative electrodes 10A, and five separators 30 by way of example, but the shape of the electrode assembly is not limited thereto. Short circuit in which the negative electrode and the positive electrode are in contact with each other or a bridge phenomenon in which the negative electrode and the positive electrode are connected to each other is caused by a thin and long thread-shaped detached material 12 attached or connected to the negative electrode 10A shown in darker color. The detached material 12 may be a negative electrode active material or a negative electrode current collector. In many cases, the detached material is a negative electrode active material.

Patent Document 1 relates to an apparatus for cutting an electrode plate, which is configured to reduce the occurrence of burrs generated when cutting the electrode plate and to remove foreign matter that is generated. Patent Document 1 discloses a clearance adjustment means configured to automatically adjust the clearance between an upper cutter and a lower cutter.

Patent Document 2 discloses a means configured to remove foreign matter generated during cutting.

Patent Document 3 discloses a cartridge type blade configured to maintain a constant clearance between an upper cutter and a lower cutter. The cartridge type blade allows for easy adjustment of the clearance and equilibrium between the upper cutter and the lower cutter.

Patent Document 4 discloses a unit cell manufacturing apparatus including an L-shaped cutter corresponding to the shape of an electrode to be cut and a unit cell manufacturing method using the same, wherein the L-shaped cutter includes a long blade similar to the conventional upper and lower cutters.

Patent Document 5 discloses an electrode assembly including a cutout capable of notching an outer circumferential end thereof into a serrated shape. Specifically, Patent Document 5 is technology for a small cylindrical battery, wherein the entire outer circumference of the cylindrical electrode assembly is serrated in order to maintain the appearance itself in a cylindrical shape.

Conventionally, as described above, the clearance or equilibrium between the upper cutter and the lower cutter is adjusted to remove burrs of a metal thin film, which is a current collector, generated by cutting. A detached material according to the present invention may also be caused by the adhesion of an electrode active material itself, and may be generated from the upper cutter and the lower cutter under normal conditions. Therefore, this problem is not solved only by conventional adjustment of clearance or alignment between the upper cutter and the lower cutter. Even when an unusually shaped cutter is used, there is provided a region of a long blade similar to the conventional upper and lower cutters, and the blade seems to be intended to define the shape of the electrode assembly. In addition, the prior art not only does not recognize the problem of a detached material solved by the present invention but also does not seem to solve the same.
Korean Patent Application Publication No. 2006-0027258 ("Patent Document 1")
Korean Patent Application Publication No. 2017-0097515 ("Patent Document 2")
Korean Patent Application Publication No. 2022-0013246 ("Patent Document 2")
Korean Patent Application Publication No. 2023-0042561 ("Patent Document 4")
Korean Registered Patent Publication No. 2064926 ("Patent Document 5")

### [Disclosure]

### [Technical Problem]

The present invention has been made in view of the above problems, and it is an object of the present invention to provide an electrode cutter capable of preventing or reducing a detached material generated during a process of cutting an electrode or reducing the length of the detached material, an electrode cutting method using the same, an electrode manufactured by the method, and an electrode assembly including the electrode.

### [Technical Solution]

In order to accomplish the above object, the present invention provides an electrode cutter including an upper cutter and a lower cutter, wherein the upper cutter and the lower cutter are configured to cut an electrode, wherein the upper cutter and the lower cutter come into contact with each other to cut the electrode, and wherein a zigzag-shaped cutting portion is provided on at least one of a surface of the upper cutter and one surface of the lower cutter in a blade length direction.

The electrode cutter may be generally used in an electrode assembly manufacturing apparatus including at least one conveying roller configured to move an electrode sheet, a lamination unit configured to laminate the electrode sheet by applying heat and pressure to the electrode sheet, and a notching cutter configured to notch the electrode sheet to form an electrode.

The electrode may be a positive electrode or a negative electrode, and may be a positive electrode, a negative electrode, or a positive electrode and a negative electrode, depending on the type of an active material and a binder used in the positive electrode and the negative electrode.

A rear surface of the upper cutter and a rear surface of the lower cutter, specifically a rear surface of a lower part of the upper cutter and a rear surface of an upper part of the lower cutter, may come into contact with each other to cut the electrode. The cutting portion may be provided on at least one of the rear surface of the upper cutter and the rear surface of the lower cutter, specifically at least one of the rear surface of the lower part of the upper cutter and the rear surface of the upper part of the lower cutter. In addition, the cutting portion may be provided on each of the rear surface of the upper cutter and the rear surface of the lower cutter, specifically each of the rear surface of the lower part of the upper cutter and the rear surface of the upper part of the lower cutter. In this case, the cutting portion may be provided on each of the surfaces of the upper cutter and the lower cutter in contact with each other.

The cutting portion may be provided only on a part of the upper cutter and/or the lower cutter. Specifically, the cutting portion may be provided only on a part of the upper cutter and/or the lower cutter in the blade length direction. As another example, the cutting portion may be provided only on a part of the upper cutter and/or the lower cutter in a direction perpendicular to the blade length direction. As a further example, the cutting portion may be provided only on a part of the upper cutter and/or the lower cutter in the blade length direction, and may be provided only on a part of the upper cutter and/or the lower cutter in a direction perpendicular to the blade length direction.

The cutting portion may be disposed on the entirety of each of the upper cutter and the lower cutter. In this case, the entirety of each of the upper cutter and the lower cutter may be formed in a zigzag shape.

The zigzag shape may be at least one of a triangular waveform shape, a polygonal waveform shape having four or more angles, and a curved waveform shape.

The zigzag shape may be a repeat of a same shape or a succession of non-identical shapes.

A line segment of the zigzag shape may have a length of 3 mm or less, preferably 2 mm or less. The line segment mentioned herein refers to the line segment when the zigzag shape is a polygon, and when the zigzag shape is a curve, the line segment refers to the length between the parts of the curve where the shape of the curve turns sharply.

The upper cutter may be generally formed in the shape of a cuboid having a large length and a small thickness, and the lower cutter may also be generally formed in the shape of a cuboid having a large length and a small thickness. In this case, the cutting portion may be provided on the rear surface of the upper cutter and/or the lower cutter.

Another form of the upper cutter may include an upper cutter body generally formed in a cuboid shape having a large length and a small thickness, a lower part of the upper cutter body being inclined upward toward the inside of the cuboid shape so as to be symmetrical with respect to the middle of the cuboid shape in the blade length direction, and a first upper cutter blade and a second upper cutter blade disposed so as to be symmetrical with respect to an upper cutter blade middle part, which is the middle of the lower part of the upper cutter body in the blade length direction, the first upper cutter blade and the second upper cutter blade being provided only on a front surface of the upper cutter body so as to be inclined upward, and the cutting portion may be provided on a rear surface of each of the first upper cutter blade and the second upper cutter blade.

Another form of the upper cutter may further include only the upper cutter body inclined upward toward the inside of the cuboid, in which case the cutting portion may be provided on the rear surface of the upper cutter or the upper cutter body.

A further form of the upper cutter may further include only the first upper cutter blade and the second upper cutter blade, in which case the cutting portion may be provided on the rear surface of each of the first upper cutter blade and the second upper cutter blade.

The lower cutter may include a lower cutter body generally formed in a cuboid shape having a large length and a small thickness and a lower cutter blade provided only on a front surface of the lower cutter body so as to be inclined upward, and the cutting portion may be provided on a rear surface of the lower cutter blade.

Another form of the lower cutter may have no lower cutter blade. In this case, the cutting portion may be provided on a rear surface of the lower cutter body.

The electrode cutter may further include a detached material removal unit configured to remove a detached material and/or burrs generated when cutting the electrode.

In addition, the present invention provides a method of cutting an electrode using the electrode cutter, an electrode manufactured by the electrode cutter, an electrode assembly including the electrode, a battery module or battery pack including the electrode assembly, and a product including the electrode assembly.

The present invention provides an electrode assembly configured to be formed by stacking of electrodes and a separator, wherein at least one of the electrodes has a zigzag shape formed on at least one side from which no electrode tab protrudes.

A line segment of the zigzag shape may have a length of 3 mm or less, preferably 2 mm or less. The line segment mentioned herein refers to the line segment when the zigzag shape is a polygon, and when the zigzag shape is a curve, the line segment refers to the length between the parts of the curve where the shape of the curve turns sharply.

In addition, the present invention may provide any combinations of the above solving means.

### [Advantageous Effects]

According to the present invention, it is possible to provide an electrode cutter capable of preventing or reducing a thin and long thread-like detached material generated during a process of cutting an electrode or reducing the length of the detached material, an electrode cutting method using the same, an electrode manufactured by the method, and an electrode assembly including the electrode.

The electrode cutter according to the present invention is provided with a zigzag-shaped cutting portion, and therefore, even if a thin and long thread-like detached material is generated, the length of the detached material may be reduced because the length of each blade corresponding to the zigzag shape is small, thereby preventing or reducing short circuit in which a negative electrode and a positive electrode are in contact with each other or a bridge phenomenon in which the negative electrode and the positive electrode are connected to each other.

### [Description of Drawings]

FIG. 1 is a photograph showing a cut surface of a conventional negative electrode from which a detached material has been generated.
FIG. 2 is a schematic view showing a general electrode lamination apparatus.
FIG. 3 is a side view showing a conventional electrode cutting apparatus.
FIG. 4 is a perspective view showing an upper cutter and a lower cutter of the conventional cutter.
FIG. 5 is a schematic view showing a conventional electrode assembly in which electrodes each including a detached material are stacked.
FIG. 6 is a perspective view showing an upper cutter and a lower cutter of a cutter according to a first embodiment of the present invention.
FIG. 7 is a perspective view showing a front surface and a rear surface of each of the upper cutter and the lower cutter according to the first embodiment of the present invention.
FIG. 8 is a front view, a side view, and a bottom view showing the rear surface of the upper cutter according to the first embodiment of the present invention with an enlarged view showing a cutting portion.
FIG. 9 is a schematic view showing an upper cutter of a cutter according to a second embodiment of the present invention.
FIG. 10 is a schematic view showing a negative electrode when the cutter according to the present invention is used.
FIG. 11 is a schematic view showing an electrode assembly in which electrodes according to the present invention are stacked.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

In addition, in the description of the invention and the claims of the present application, singular forms are intended to include plural forms unless mentioned otherwise.

In addition, in the description of the invention and the claims of the present application, "or" includes "and" unless mentioned otherwise. Therefore, "including A or B" means three cases, namely, the case including A, the case including B, and the case including A and B.

In addition, all numeric ranges include the lowest value, the highest value, and all intermediate values therebetween unless the context clearly indicates otherwise.

Embodiments of the present invention will be described in more detail with reference to the drawings.

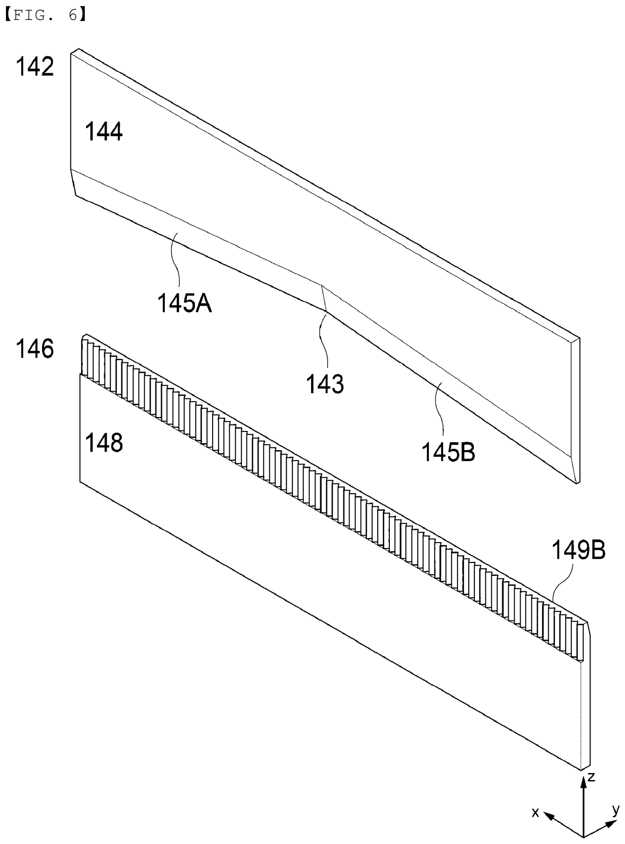

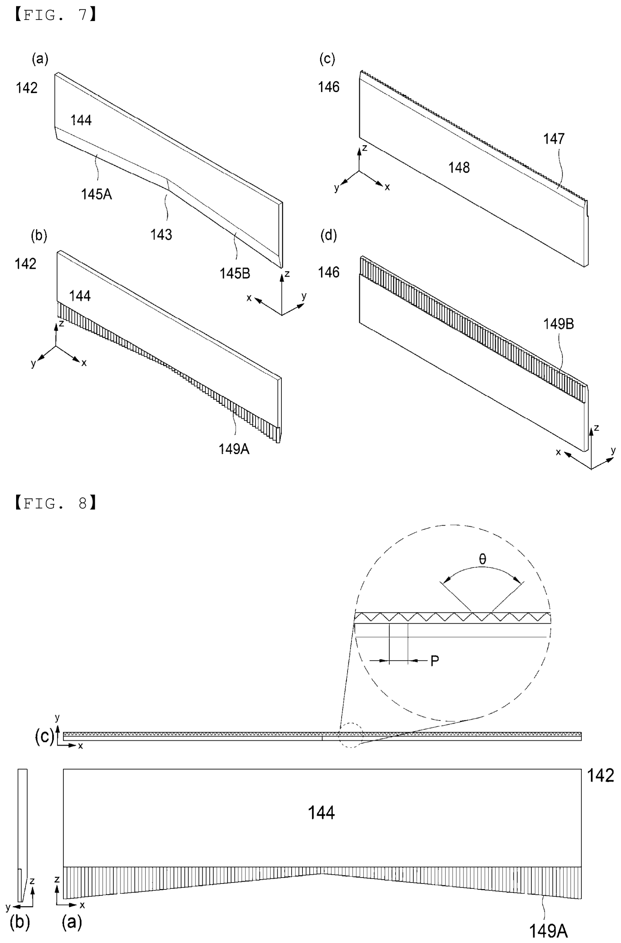

FIG. 6 is a perspective view showing an upper cutter and a lower cutter of a cutter according to a first embodiment of the present invention, and FIG. 7 is a perspective view showing a front surface and a rear surface of each of the upper cutter and the lower cutter according to the first embodiment of the present invention.

(a) and (b) of FIG. 7 show the front surface and the rear surface of the upper cutter, respectively, and (c) and (d) of FIG. 7 show the front surface and the rear surface of the lower cutter, respectively. In the upper cutter 142 and the lower cutter 146 configured to cut electrodes, the rear surface of the upper cutter 142 and the rear surface of the lower cutter 146 contact each other to cut an electrode. FIG. 6 substantially shows the disposition of the upper cutter 142 and the lower cutter 146 for cutting electrodes. Zigzag-shaped cutting portions 149A and 149B are provided respectively on the rear surface of the upper cutter 142 and the rear surface of the lower cutter 146 in a blade length direction. x, y, and z denoting coordinates in all of the drawings are set based on FIG. 4 or 6.

The upper cutter 142 includes an upper cutter body 144 generally formed in the shape of a cuboid having a large length in the x direction and a small thickness in the y direction, a lower part of the upper cutter body being inclined upward in the z direction, which is a direction toward the inside of the cuboid, so as to be symmetrical with respect to the middle of the cuboid in the x direction, which is the blade length direction, and a first upper cutter blade 145A and a second upper cutter blade 145B disposed so as to be symmetrical with respect to an upper cutter blade middle part 143, which is the middle of the lower part of the upper cutter body 144 in the blade length direction, the first upper cutter blade and the second upper cutter blade being provided only on the -y directional surface of the upper cutter body 144, which is the front surface of the upper cutter body, in a shape of being inclined in the z direction, which is the upward direction, wherein the cutting portion 149A is provided on the y-directional surface of each of the first upper cutter blade 145A and the second upper cutter blade 145B, which is the rear surface of each of the first upper cutter blade and the second upper cutter blade. The cutting portion 149A is provided on the surface of the upper cutter 142 in contact with the lower cutter 146.

The lower cutter 146 includes a lower cutter body 148 generally formed in the shape of a cuboid having a large length and a small thickness and a lower cutter blade 147 provided only on the y directional surface of the lower cutter body 148, which is the front surface of the lower cutter body, so as to be inclined, wherein the cutting portion 149B is provided only on the y directional surface of the lower cutter blade 147, which is the rear surface of the lower cutter blade. The width of the lower cutter blade 147 in the -z direction, which is perpendicular to the blade length direction may be less than the width of the first upper cutter blade 145A or the second upper cutter blade 145B in the z direction, which is perpendicular to the blade length direction.

Although not shown in the figures, the cutting portions may be provided only on a part of the upper cutter 142 and/or a part of the lower cutter 146, unlike the cutting portions 149A and 149B shown in FIGs. 6 and 7. Specifically, the cutting portions may be provided only on a part of the rear surface of the first upper cutter blade 145A, a part of the rear surface of the second upper cutter blade 145B, and a part of the rear surface of the lower cutter blade 147. In a first example, the cutting portion may be provided only on a part of the rear surface of each of the first upper cutter blade 145A and the second upper cutter blade 145B in the blade length direction. In a second example, the cutting portion may be provided only on a part of the rear surface of each of the first upper cutter blade 145A and the second upper cutter blade 145B in a direction perpendicular to the blade length direction. In a third example, the cutting portion may be provided only on a part of the rear surface of each of the first upper cutter blade 145A and the second upper cutter blade 145B in the blade length direction, and the cutting portion may be provided only on a part of the rear surface of each of the first upper cutter blade 145A and the second upper cutter blade 145B in a direction perpendicular to the blade length direction. Since the lower cutter 146 must be engaged with the upper cutter 142, the cutting portion is also provided only in a part of the lower cutter 146 in the three cases described above.

Specifically, the cutting portions 149A and 149B shown in FIGs. 6 and 7 are provided on the entireties of the rear surfaces of the first upper cutter blade 145A, the second upper cutter blade 145B, and the lower cutter blade 148 in the blade length direction, and are provided on the entireties of the rear surfaces of the first upper cutter blade 145A, the second upper cutter blade 145B, and the lower cutter blade 148 in a direction perpendicular to the blade length direction. That is, in the case of FIGs. 6 and 7, the first upper cutter blade 145A and the second upper cutter blade 145B are formed, and the cutting portions 149A and 149B are provided on the specified parts thereof.

Since the rear surface of the upper cutter and the rear surface of the lower cutter are in contact with each other to cut the electrode, the first upper cutter blade, the second upper cutter blade, and the lower cutter blade may not be essential. In addition, the shape of the upper cutter body that is inclined upward in the z direction, which is a direction toward the inside of the cuboid, may also not be essential. However, considering the actual clearance between the upper cutter and the lower cutter, the stress applied to the cut part, the discharge of the cut part, and the like, cutting may be more efficiently performed if each of the first upper cutter blade, the second upper cutter blade, and the lower cutter blade has an inclined shape and an inclined surface.

That is, unlike FIGs. 6 and 7, the first upper cutter blade and the second upper cutter blade may be configured to have no inclined part in the x-axis direction, to have no inclined parts in the z-axis direction, or to have no inclined part in the x-axis direction and no inclined part in the z-axis direction (not shown). The lower cutter blade may also have no inclined part. If the cutting portions are provided on both the upper cutter and the lower cutter, the cutting portions may be disposed so as to be engaged with each other. In this case, unlike conventional contact between the rear surface of the upper cutter and the rear surface of the lower cutter, the upper cutter and the lower cutter must be disposed so as to be closer to each other by the intersection size of the cutting portions. If the cutting portion is provided only on the upper cutter or the lower cutter, the upper cutter and the lower cutter are disposed in the same manner as conventional contact between the rear surface of the upper cutter and the rear surface of the lower cutter.

FIG. 8 is a front view (a), a side view (b), and a bottom view (c) showing the rear surface of the upper cutter 142 according to the first embodiment of the present invention and an enlarged view showing the cutting portion 149A. As a specific example, the length of the upper cutter 142 in the x direction, which is the blade length direction, may be 400 mm, and the length of the upper cutter in the z direction, which is the height of the upper cutter, may be 100 mm. Since the cutting portion 149A of the upper cutter and the cutting portion 149B of the lower cutter are engaged with each other, zigzags must have the same pitch and angle, and the cutting portions must be engaged with each other when the upper cutter 142 and the lower cutter 146 are in contact with each other. In an example of the cutting portion 149A, the zigzag has a pitch (P) of 5.5 mm and an angle (θ) of 90 degrees.

Although the embodiment according to the present invention shows only that the zigzags have the same shape, the present invention is not limited thereto. In addition, although FIG. 1 shows a conventional negative electrode, the electrode cutter according to the present invention may be applied to all of a negative electrode, a positive electrode, and a current collector. Herein, the negative electrode and the positive electrode specifically refer to a negative electrode active material and a positive electrode active material, respectively. Even if a detached material is generated, a detached material having a size less than a certain size does not affect short circuit or bridge generation because the size of a separator is greater than the size of the electrode active material layer. In consideration thereof, the present invention limits the size of the detached material which may be generated by forming the cutting portion in a zigzag shape.

The size of the detached material generated during actual cutting, precisely the length of the detached material, is determined by the length of one line segment of the zigzag shape of the cutting portion. The line segment mentioned herein refers to the line segment when the zigzag shape is a polygon, and when the zigzag shape is a curve, the line segment refers to the length between the parts of the curve where the shape of the curve turns sharply.

In order to prevent short circuit, the length of one line segment of the zigzag shape of the cutting portion is 3 mm or less, preferably 2 mm or less. However, the angle (θ) must be less than 180 degrees to form a zigzag shape. As the angle (θ) approaches 0, the overall width of the zigzag shape increases, and therefore the amount of the active material discarded by the cutting portion increases. Considering this point alone, it is desirable to make the angle (θ) larger, but there may be a problem of the detached material being connected without being cut depending on the viscosity of the active material, the clearance between the upper cutter and the lower cutter, etc., and therefore it is necessary to form a smaller angle than 180 degrees in actual application.

Considering these points, it can be seen that the zigzag shape does not require the length and angle of the line segments to be the same and that the object of the present invention can be accomplished only by forming the zigzag shape. Referring to the zigzag shape presented by the present invention by way of example and the above description, it will be readily apparent to a person having ordinary skill in the art that the zigzag shape can be transformed not only into a kind of triangular waveform shape as exemplified in the figures but also into other polygonal waveform shapes as well as into a curved waveform shape.

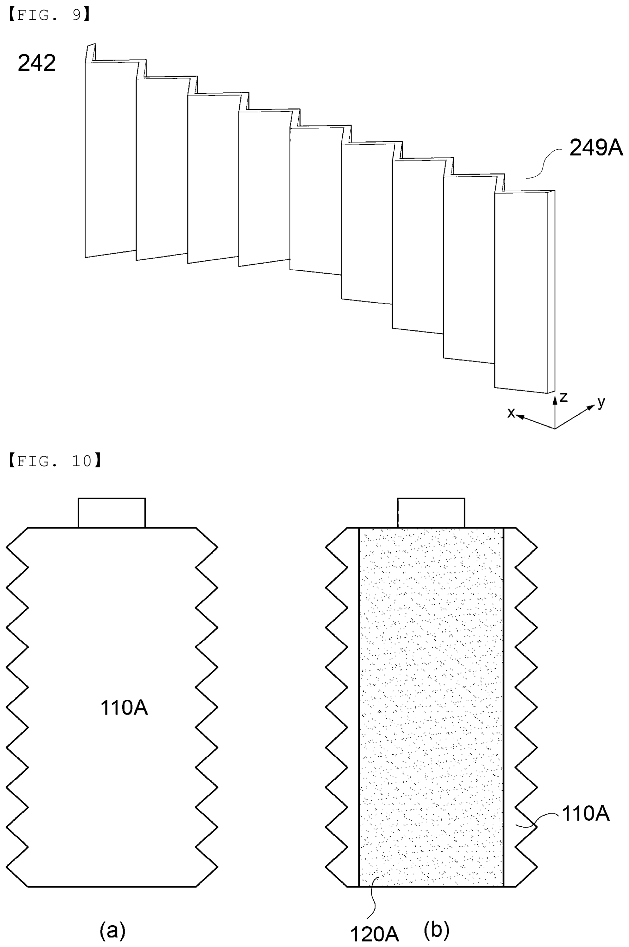

FIG. 9 is a schematic view showing an upper cutter 242 of a cutter according to a second embodiment of the present invention. The upper cutter 242 shown in FIG. 9 is configured such that a cutting portion 249A is provided on the entirety of an upper cutter body without distinguishing between a front and a rear surface. Since a lower cutter must correspond in shape to the upper cutter 242, the shape of the lower cutter is similar to the shape of the upper cutter 242. Although the zigzag shape of FIG. 9 is shown larger than that of FIG. 8, this is an example, and the zigzag shape is preferably the same size as described with reference to FIG. 8, and may be deformed as described with reference to FIG. 8.

Since the electrode is cut in the zigzag shape of the cutting portion, it is desirable to limit the length of one end of the zigzag shape such that the maximum size of the detached material does not exceed the thickness of the electrode. However, since the shape to be cut is a zigzag shape, even if the length of one end of the zigzag shape is greater than the thickness of the electrode, the zigzag shape does not lengthen the detached material in a straight line, or the detached material is easily broken again shape after cutting by the zigzag shape, whereby the length of the detached material is reduced. Therefore, the length of one end of the zigzag shape is not necessarily limited only by the thickness of the electrode.

FIG. 10 is a schematic view showing a negative electrode 110A when the cutter according to the present invention is used. (a) of FIG. 10 shows that the left and right sides of the side from which a negative electrode tab protrudes are cut in a zigzag shape, and (b) of FIG. 10 shows the case in which a positive electrode 120A is stacked on the negative electrode 110A for comparison. The zigzag shape is somewhat exaggeratedly shown compared to the actual ratio. If the negative electrode is larger than the positive electrode, when both sides of the negative electrode are cut in a zigzag shape, the minimum width of the part cut in zigzag is preferably greater than the width of the positive electrode. This is necessary to reduce the probability that the negative electrode and the positive electrode are in contact with each other even if the detached material is generated.

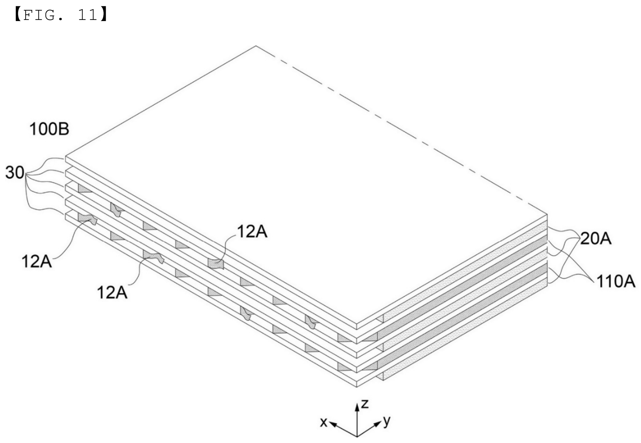

As described with reference to FIG. 8, the length of one line segment of the zigzag shape of the cutting portion applied to the negative electrode shown in FIG. 10 is 3 mm or less, preferably 2 mm or less. In FIG. 10, the angle formed by the zigzag shape is 90 degrees, as in FIG. 8, but the present invention is not limited thereto. However, in order to form a zigzag shape, the angle must be less than 180 degrees. As the angle (θ) reaches 0, the overall width of the zigzag shape increases, and therefore the amount of the active material discarded by the cutting portion increases. Considering this point alone, it is desirable to make the angle (θ) larger, but there may be a problem of the detached material being connected without being cut depending on the viscosity of the active material, the clearance between the upper cutter and the lower cutter, etc., and therefore it is necessary to form a smaller angle than 180 degrees in actual application. FIG. 11 is a schematic view showing an electrode assembly 100B in which electrodes according to the present invention are stacked. Referring to FIG. 11, the electrode assembly 100B includes three positive electrodes 20A, two negative electrodes 110A, and five separators 30 by way of example, but the shape of the electrode assembly is not limited thereto. The length of a thin and long thread-like detached material 12A attached to the negative electrode 110A is greatly reduced compared to the detached material 12 of the conventional electrode assembly (see FIG. 5). As a result, it is possible to prevent or reduce short circuit in which the negative electrode and the positive electrode are in contact with each other or a bridge phenomenon in which the negative electrode and the positive electrode are connected to each other, which may occur in the conventional electrode assembly 100A.

Those skilled in the art to which the present invention pertains will appreciate that various applications and modifications are possible within the scope of the present invention based on the above description.

### (Description of Reference Symbols)

100: Electrode lamination apparatus
100A, 100B: Electrode assemblies
10: Middle electrode
10A, 110A: Negative electrodes
12, 12A: Detached materials
20: Upper and lower electrodes
20A, 120A: Positive electrodes
30: Separator
40: First cutter
50: Second Cutter
60: Lamination unit
70: Third cutter
42, 142, 242: Upper cutters
43, 143: Upper cutter blade middle parts
44, 144: Upper cutter bodies
45A, 145A: First upper cutter blades
45B, 145B: Second upper cutter blades
46, 146: Lower cutters
147: Lower cutter blade
48, 148: Lower cutter bodies
149A, 149B, 249A: Cutting portions
P: Zigzag pitch
θ: Angle

## Claims

1. An electrode cutter, comprising:
an upper cutter; and
a lower cutter, wherein the upper cutter and the lower cutter are configured to cut an electrode,
wherein the upper cutter and the lower cutter come into contact with each other to cut the electrode, and
wherein a zigzag-shaped cutting portion is provided on at least one of a surface of the upper cutter and a surface of the lower cutter in a blade length direction.

2. The electrode cutter according to claim 1, wherein
a rear surface of the upper cutter and a rear surface of the lower cutter come into contact with each other to cut the electrode, and
the cutting portion is provided on at least one of the rear surface of the upper cutter and the rear surface of the lower cutter.

3. The electrode cutter according to claim 2, wherein the cutting portion is provided on each of the rear surface of the upper cutter and the rear surface of the lower cutter.

4. The electrode cutter according to claim 2, wherein the cutting portion is provided only on a part of the upper cutter and/or the lower cutter in the blade length direction.

5. The electrode cutter according to claim 2, wherein the cutting portion is provided only on a part of the upper cutter and/or the lower cutter in a direction perpendicular to the blade length direction.

6. The electrode cutter according to claim 1, wherein, when the cutting portion is provided on each of the upper cutter and the lower cutter, the cutting portion is disposed on an entirety of each of the upper cutter and the lower cutter.

7. The electrode cutter according to claim 1, wherein the zigzag shape is at least one of a triangular waveform shape, a polygonal waveform shape having four or more angles, and a curved waveform shape.

8. The electrode cutter according to claim 1, wherein the zigzag shape is a repeat of a same shape or a succession of non-identical shapes.

9. The electrode cutter according to claim 1, wherein a line segment of the zigzag shape has a length of 3 mm or less.

10. The electrode cutter according to claim 1, wherein
the upper cutter comprises an upper cutter body generally formed in a cuboid shape having a large length and a small thickness, and
the cutting portion is provided on a rear surface of the upper cutter body.

11. The electrode cutter according to claim 1, wherein
the upper cutter comprises:
an upper cutter body generally formed in a cuboid shape having a large length and a small thickness, a lower part of the upper cutter body being inclined upward toward an inside of the cuboid shape so as to be symmetrical with respect to a middle of the cuboid shape in the blade length direction; and
a first upper cutter blade and a second upper cutter blade disposed so as to be symmetrical with respect to an upper cutter blade middle part, which is a middle of the lower part of the upper cutter body in the blade length direction, the first upper cutter blade and the second upper cutter blade being provided only on a front surface of the upper cutter body so as to be inclined upward, and
the cutting portion is provided on a rear surface of each of the first upper cutter blade and the second upper cutter blade.

12. The electrode cutter according to claim 1, wherein
the lower cutter comprises a lower cutter body generally formed in a cuboid shape having a large length and a small thickness, and
the cutting portion is provided on a rear surface of the lower cutter body.

13. The electrode cutter according to claim 1, wherein
the lower cutter comprises:
a lower cutter body generally formed in a cuboid shape having a large length and a small thickness; and
a lower cutter blade provided only on a front surface of the lower cutter body so as to inclined upward, and
the cutting portion is provided on a rear surface of the lower cutter blade.

14. The electrode cutter according to claim 1, further comprising a detached material removal unit configured to remove a detached material and/or burrs generated when cutting the electrode.

15. A method of cutting an electrode using the electrode cutter according to any one of claims 1 to 14.

16. An electrode manufactured by the method according to claim 15.

17. An electrode assembly comprising the electrode according to claim 16.

18. An electrode assembly configured to be formed by stacking of electrodes and a separator, wherein at least one of the electrodes has a zigzag shape formed on at least one side from which no electrode tab protrudes.

19. The electrode assembly according to claim 18, wherein a line segment of the zigzag shape has a length of 3 mm or less.
